# FASCICULE DE BREVET EUROPEEN

(11) **EP 1 874 507 B1**
(45) Date de publication et mention de la délivrance du brevet: **01.07.2009**
(21) Numéro de dépôt: 06725353.4
(22) Date de dépôt: 28.03.2006
(51) Int. Cl.: B25J 17/02, B23K 26/10, B05B 13/04, F16M 11/12, F16M 11/18

(54) **DISPOSITIF D'ENTRAINEMENT D'UN OBJET SUIVANT DES MOUVEMENTS DE ROTATION COMBINES**
ANTRIEBSVORRICHTUNG FÜR EIN KOMBINIERTE DREHBEWEGUNGEN AUSFÜHRENDES OBJEKT
DRIVE DEVICE FOR AN OBJECT PERFORMING COMBINED ROTATIONAL MOVEMENTS

(30) Priorité: 25.04.2005 EP 05103321
(43) Date de publication de la demande: 09.01.2008
(73) Titulaire: Mougin, Jean-Jacques, 2300 La Chaux-de-Fonds (CH)
(72) Inventeur: Mougin, Jean-Jacques, 2300 La Chaux-de-Fonds (CH)
(74) Mandataire: GLN
(86) Numéro de dépôt international: PCT/EP2006/061089
(87) Numéro de publication internationale: WO 2006/114359

(56) Documents cités:
- EP-A- 0 265 661
- EP-A- 0 279 591
- EP-A- 1 334 775
- US-A- 4 030 617

## Description

### Domaine technique

La présente invention se rapporte au domaine des mouvements mécaniques, en particulier rotatifs, lorsqu'ils sont mis en oeuvre dans la construction mécanique, dans l'automatisation ou la robotisation d'appareillages, notamment d'usinage.

Plus précisément, la présente invention concerne un dispositif d'entraînement d'un objet, suivant au moins trois mouvements de rotation combinés, comportant des premier, deuxième et troisième arbres creux et coaxiaux d'axe X1 destinés à être respectivement entraînés en rotation, par rapport à l'axe X1, par des premiers, des deuxièmes et des troisièmes moyens moteur, indépendamment les uns des autres. Par ailleurs, le premier arbre présente une extrémité libre portant une première surface de sortie sensiblement plane, de contour général circulaire, et orientée perpendiculairement à un axe X2 coupant l'axe X1 en définissant un angle α. Des moyens de liaison mécanique sont prévus pour relier cinématiquement le deuxième arbre à un support monté libre en rotation sur la première surface de sortie, tandis qu'un renvoi intermédiaire d'axe X2 est prévu pour relier cinématiquement le troisième arbre à l'objet, ce dernier étant monté dans le support en étant libre en rotation autour d'un axe X3. En outre, il est également prévu que l'axe X3 présente un angle α par rapport à l'axe X2, les trois axes X1, X2 et X3 se coupant en un point unique.

### Etat de la technique

La mise en application actuelle de mouvements rotatifs complexes, notamment par la mise en oeuvre de dispositifs d'angulation par liens mécaniques, nécessite la construction de structures encombrantes, d'unités complexes dissociées les unes des autres impliquant des risques de collisions, des problèmes de rigidité ainsi que des dysfonctionnements inhérents à la lourdeur des éléments mécaniques constitutifs de ces dispositifs. En outre, les angles des mouvements sont souvent trop limités pour certaines applications spécifiques.

Le brevet EP 0 279 591 décrit un tel dispositif comprenant trois arbres d'entraînement coaxiaux permettant de commander le déplacement d'un objet suivant trois mouvements de rotation combinés. Ce dispositif présente toutefois un certain nombre d'inconvénients dont, notamment, un encombrement perfectible, de même que la stabilité de l'objet entraîné lorsque des contraintes mécaniques lui sont appliquées. En outre, du fait de sa construction, ce dispositif ne permet pas d'accéder à l'extrémité interne de l'objet sans effectuer un démontage partiel. Ainsi, dans le cas d'une application de ce dispositif à l'entraînement d'un système nécessitant une alimentation électrique par exemple, cette dernière ne pourrait être effectuée que depuis l'extérieur de la structure, ce qui pose des problèmes importants dans une approche dynamique.

### Exposé de l'invention

La présente invention a pour but d'améliorer les dispositifs connus de l'art antérieur en palliant aux problèmes susmentionnés.

Dans ce but, l'invention concerne un dispositif d'entraînement du type mentionné plus haut, caractérisé par le fait qu'il comporte un passage central reliant les arbres à l'objet et par le fait que ce dernier est monté en prise avec un premier engrenage du renvoi intermédiaire orienté en direction de l'axe X2.

Grâce à ces caractéristiques particulières, le dispositif présente un encombrement réduit par rapport aux dispositifs connus de l'état de la technique, tout en offrant une rigidité importante, renforcée par l'appui d'une partie de l'objet sur une région intérieure du renvoi intermédiaire. En outre, l'amenée d'une alimentation électrique, par exemple, est possible depuis le côté du dispositif jusqu'à l'objet, au travers du passage central, voire au travers de l'objet s'il comporte un trou traversant.

Dans un mode de réalisation préféré du dispositif selon la présente invention, le troisième arbre est en prise avec un deuxième engrenage du renvoi intermédiaire orienté en direction dudit axe X2, tandis que le renvoi intermédiaire est monté dans le support au moyen de deux paliers disposés à l'extérieur du volume d'un cylindre d'axe X2 et délimité à sa périphérie par le plus grand des engrenages. Préférablement, les deux paliers sont disposés de part et d'autre du plus grand des engrenages suivant la direction de l'axe X2. Grâce à une telle structure, la rigidité du dispositif est encore améliorée et optimise ainsi la précision du contrôle des mouvements qu'un utilisateur souhaite transmettre à l'objet.

De manière avantageuse, le support présente la forme d'une calotte sphérique, l'objet présentant une extrémité externe disposée sensiblement à fleur de la surface du support. Dans ces conditions, l'entraînement d'un objet suivant des mouvements de rotation complexes peut être réalisé facilement, avec une grande liberté de mouvement ainsi qu'une grande accessibilité de l'objet entraîné. En effet, l'environnement de l'objet n'est pratiquement pas encombré par la structure du dispositif dont tous les constituants se trouvent concentrés dans une même région autour de l'objet. En outre, les risques de collision avec d'autres dispositifs ou avec un utilisateur sont supprimés du fait que le support occupe complètement le volume susceptible d'être parcouru par l'objet.

Un avantage supplémentaire du dispositif selon la présente invention réside dans le fait que, lorsque l'objet entraîné comprend un trou, les arbres de transmission des mouvements de rotation peuvent être mis à profit pour transporter de la lumière ou de la matière au travers du dispositif jusqu'à l'objet. L'orientation de ce dernier détermine alors la direction d'éjection de la lumière ou de la matière. Le dispositif peut ainsi être mis en oeuvre sous la forme d'un dispositif d'illumination ou de propulsion d'un fluide, par exemple. On peut également prévoir que l'objet est une caméra vidéo susceptible de prendre quasiment n'importe quelle orientation.

La structure avantageuse du dispositif selon l'invention peut être mise à profit pour y loger des moyens de détection des mouvements réellement effectués par ses différents constituants rotatifs et permettre d'agir sur les moyens moteur pour corriger les éventuelles déviations en conséquence. Il est alors possible d'obtenir un niveau de précision extrême sur les déplacements de l'objet, sans pour autant nuire à l'encombrement du dispositif.

### Brève description des figures

D'autres caractéristiques avantageuses de l'invention apparaîtront plus clairement à la lecture de la description qui suit, faite en référence au dessin annexé, dans lequel :
- la figure 1a est une vue latérale simplifiée du dispositif complet selon un mode de réalisation préféré de la présente invention,
- la figure 1b est une vue similaire à celle de la figure 1a, avec un angle de vue orienté à 90 degrés par rapport à celui de la figure 1a,
- la figure 2 est une vue en coupe simplifiée du dispositif des figures précédentes, la coupe étant réalisée suivant un plan perpendiculaire au plan de la figure 1a et contenant la ligne A-A,
- la figure 3 est une vue en coupe du dispositif des figures précédentes, la coupe étant réalisée suivant un plan perpendiculaire au plan de la figure 1b et contenant la ligne B-B, et
- la figure 4 est une vue en coupe, similaire à la vue de la figure 3, d'une variante de réalisation du mode préféré représenté sur les figures précédentes.

### Description détaillée d'un mode de réalisation préféré

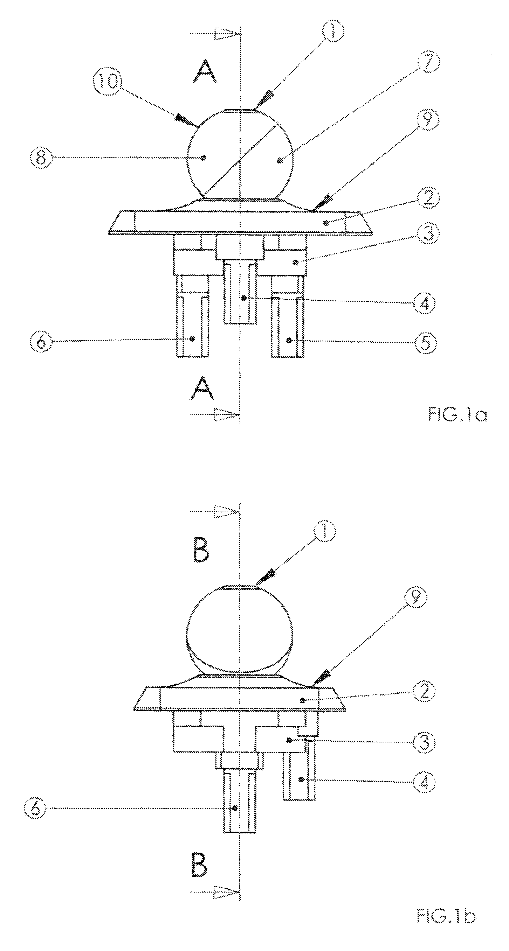

Les figures 1a et 1b représentent le dispositif d'entraînement selon un mode de réalisation préféré de l'invention, dans deux vues latérales simplifiées dont l'une est orientée à 90 degrés par rapport à l'autre. Dans ce mode de réalisation, décrit à titre non limitatif, le dispositif d'entraînement est destiné à transmettre un mouvement de rotation complexe à un objet 1, destiné à positionner une pièce à usiner, par exemple.

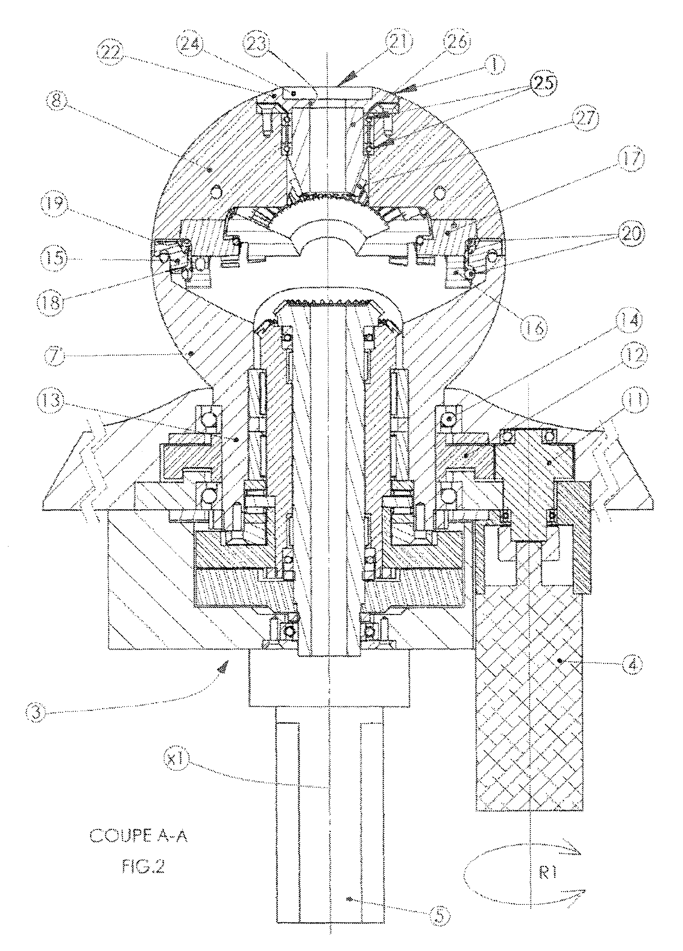

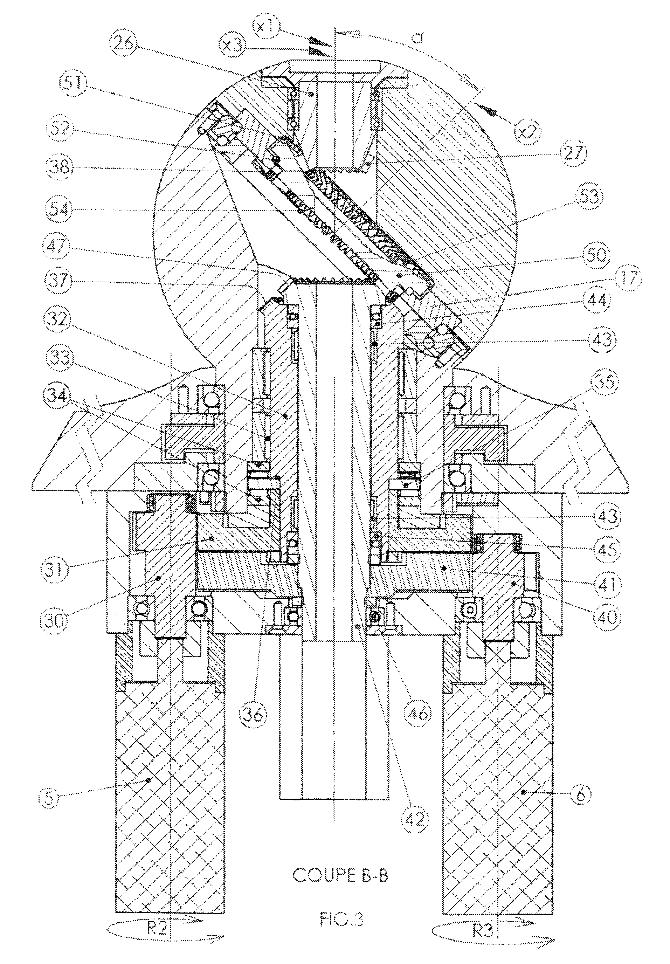

Le dispositif comporte un bâti 2 dans et sous lequel sont disposés des mécanismes d'entraînement 3, qui seront décrits plus loin en relation avec les figures 2 et 3, ainsi que trois moteurs 4, 5 et 6 indépendants et reliés aux mécanismes d'entraînement pour générer trois mouvements de rotation distincts (symbolisés respectivement par les double flèches référencées R1, R2 et R3 sur les figures 2 et 3).

Il convient de noter que l'homme du métier pourra mettre en oeuvre le dispositif décrit avec tout type de moteur connu et adapté pour remplir une fonction de génération de mouvements rotatifs, quelle que soit leur orientation, sans sortir du cadre de la présente invention.

Le bâti 2 est surmonté d'un élément sphérique divisé en une base 7 et une calotte 8 sphérique complémentaire, suivant un plan incliné par rapport à la face supérieure 9 du bâti.

L'objet 1 est porté par la surface 10 de la calotte 8. Celui-ci est représenté, sur les figures 1a et 1b, dans une position axiale, autrement dit, en étant disposé suivant un axe X1 passant par le centre de la sphère et perpendiculaire à la face supérieure du bâti.

Un premier mouvement de rotation du dispositif va à présent être exposé en relation avec la vue en coupe de la figure 2, réalisée suivant le plan perpendiculaire au plan de la figure 1a et contenant la ligne A-A.

Le moteur 4 est monté solidaire d'un pignon 11 engrenant avec les dents d'une première couronne 12 des mécanismes d'entraînement centrée par rapport à l'axe X1. La couronne 12 est montée solidaire d'un premier arbre creux 13, s'étendant entre la base 7 de l'élément sphérique et l'intérieur des mécanismes d'entraînement 3. L'arbre 13 est maintenu en position sur le bâti 2 au moyen de deux roulements à billes 14, de telle manière qu'une rotation R1 du pignon 11 entraîne la rotation de la base 7 de l'élément sphérique par rapport au bâti, via la couronne 12.

D'autre part, une bague 15, d'axe X2 coupant l'axe X1 en définissant un angle α (représenté sur la figure 3), est montée fixe sur la face supérieure de la base 7, au niveau de sa jonction avec la calotte 8. Une entretoise formée de deux anneaux concentriques 16 et 17 est retenue sur la bague 15 par deux épaulements 18 et 19 ménagés respectivement sur le premier et sur le deuxième anneau. Des billes 20 sont disposées entre la bague et l'entretoise pour permettre la libre rotation de l'une par rapport à l'autre. De manière préférée, un chemin de roulement (non visible) est usiné et rectifié dans chacun des anneaux 16 et 17 pour guider les billes 20.

L'entretoise est assemblée solidairement à la calotte 8 pour assurer la connexion mécanique, en rotation, entre cette dernière et la base 7.

La calotte 8 présente un trou 21 dans lequel est logé l'objet 1. Ce dernier comprend un disque 22 reposant sur un épaulement du trou 21, de dimensions légèrement supérieures. Le disque 22 présente un trou central 23 ainsi qu'un évidement 24, orienté en direction de l'extérieur et destiné à positionner une pièce à usiner, par exemple. En direction de l'intérieur de la calotte 8, le disque 22 est suivi de roulements à billes 25 ajustés dans le trou 21 et supportant un tube 26, solidaire du disque 22.

L'extrémité du tube 26 située à l'intérieur de l'élément sphérique comporte une denture d'engrenage 27 de type conique dont la fonction sera exposée en relation avec la description de la figure 3.

Des deuxième et troisième mouvements de rotation du dispositif vont à présent être exposés en relation avec la vue en coupe de la figure 3, réalisée suivant le plan perpendiculaire au plan de la figure 1b et contenant la ligne B-B.

Le moteur 5 est monté solidaire d'un pignon 30 engrenant avec les dents d'une deuxième couronne 31 des mécanismes d'entraînement centrée par rapport à l'axe X1. La couronne 31 est montée solidaire d'un deuxième arbre creux 32, coaxial au premier arbre 13 et s'étendant, depuis les mécanismes d'entraînement 3, jusque dans la région centrale de l'élément sphérique. L'arbre 32 est maintenu en position sur le bâti 2 notamment au moyen de deux roulements à cylindres 33 ajustés à l'intérieur du premier arbre 13. Des roulements à cylindres 34 supplémentaires ont également été prévus pour supporter un anneau 35, comprimé entre un épaulement 36 de l'arbre 33 et la couronne 31, suivant la direction axiale. Grâce à cette construction, le deuxième arbre 32 est suspendu par des roulements pour être libre de tourner à la fois par rapport au bâti et par rapport au premier arbre 13.

D'autre part, l'extrémité du deuxième arbre 32 située à l'intérieur de l'élément sphérique est munie de dents d'engrenage 37 de type conique. Ces dents d'engrenage 37 sont disposées en prise avec les dents d'un engrenage 38 correspondant, également de type conique et ménagé sur la face de l'anneau 17 orientée en direction des mécanismes d'entraînement 3. Du fait que l'entretoise comprenant l'anneau 17 est montée sur la base 7 au moyen de billes 20, tel que décrit plus haut, une rotation du deuxième arbre 32 entraîne la rotation de la calotte 8, solidaire de l'entretoise, indépendamment de la base 7. Par conséquent, l'entraînement en rotation R2 du pignon 30 a pour seul effet de faire tourner la calotte 8 sur elle-même, soit autour de l'axe X2.

Le troisième moteur 6 est monté solidaire d'un pignon 40 engrenant avec les dents d'une troisième couronne 41 des mécanismes d'entraînement centrée par rapport à l'axe X1. La couronne 41 est montée solidaire d'un troisième arbre creux 42, coaxial aux premier et deuxième arbres 13 et 32 et s'étendant, depuis les mécanismes d'entraînement 3, jusque dans la région centrale de l'élément sphérique. L'arbre 42 est maintenu en position sur le bâti 2 notamment au moyen de deux roulements à cylindres 43 ajustés à l'intérieur du deuxième arbre 32. Des roulements à billes 44, 45 et 46 supplémentaires ont été prévus, en outre, pour assurer un bon positionnement et un bon maintien du troisième arbre 42, à la fois par rapport au deuxième arbre 32 et par rapport au bâti 2. Grâce à cette construction, le troisième arbre 42 est suspendu par des roulements pour être libre de tourner à la fois par rapport au bâti et par rapport au deuxième arbre 32 à l'intérieur duquel il est logé.

D'autre part, l'extrémité du troisième arbre 42 située à l'intérieur de l'élément sphérique est munie de dents d'engrenage 47 de type conique.

Un renvoi intermédiaire 50 à symétrie axiale d'axe X2 est positionné, via deux séries de billes 51 et 52, entre la calotte 8 et l'anneau 17 de l'entretoise. Des chemins de roulement (non visibles) sont également prévus, d'une part, entre la calotte 8 et le renvoi intermédiaire 50 et, d'autre part, entre l'anneau 17 et le renvoi intermédiaire pour améliorer la stabilité des séries de billes et la libre rotation d'axe X2 du renvoi intermédiaire par rapport à la calotte 8 et l'anneau 17.

Le renvoi intermédiaire 50 porte un premier engrenage 53, de type conique et orienté en direction de la surface 10 de la calotte 8, ainsi qu'un deuxième engrenage 54, également de type conique et orienté en direction des mécanismes d'entraînement 3. Ces deux engrenages sont également orientés en direction de l'axe X2, chacun de son côté respectif.

L'agencement du renvoi intermédiaire 50 est tel que son premier engrenage 53 est en prise avec l'engrenage 27 de l'objet 1 tandis que son deuxième engrenage 54 est en prise avec l'engrenage 47 du troisième arbre 42.

Du fait que le renvoi intermédiaire 50 est monté sur la calotte 8 au moyen de billes 51, 52, tel que décrit plus haut, une rotation du troisième arbre 42 entraîne la rotation du renvoi intermédiaire, par rapport à l'axe X2. La rotation du renvoi intermédiaire entraîne à son tour celle de l'objet 1 par rapport à son axe de symétrie X3, confondu avec l'axe X1 dans la configuration représentée, indépendamment de la calotte 8. Par conséquent, l'entraînement en rotation R3 du pignon 40 a pour seul effet de faire tourner l'objet 1 sur lui-même.

Les matériaux employés pour la réalisation des différents constituants du dispositif qui vient d'être décrit peuvent être choisis dans une large gamme en fonction de l'application envisagée pour le dispositif, sans sortir du cadre de la présente invention.

Dans le cas d'une application nécessitant une bonne rigidité de l'ensemble ainsi qu'une bonne précision dans les chaînes cinématiques, la plupart des éléments seront préférablement réalisés en acier trempé, par exemple.

Pour des applications plus légères et nécessitant une précision des mouvements limitée, certains constituants du dispositif pourront être réalisés en matière plastique pour abaisser les coûts de fabrication.

De manière générale, il ressort de la description des figures qui précède que le dispositif selon la présente invention permet d'intégrer trois mouvements rotatifs indépendants dans un bâti relativement compact.

Les deux premiers mouvements de rotation indépendants R1 et R2 permettent de faire parcourir à l'objet 1 une surface représentant une portion de sphère. Il apparaît clairement des figures que l'étendue de cette surface par rapport à une sphère complète est fonction de la valeur de l'angle α. En outre, de manière préférée, l'angle défini entre l'axe de l'objet 1 et l'axe X2 est égal à l'angle α pour permettre de disposer l'objet 1 en n'importe quel point de la portion de sphère par la combinaison des deux mouvements R1 et R2, notamment suivant l'axe X1, tel que représenté. On peut noter que dans ce cas, l'axe X3 de rotation de l'objet 1 et les axes X1 et X2 se coupent en un même point, à savoir le centre de l'élément sphérique.

En plus de son efficacité, le dispositif selon la présente invention procure une grande liberté dans les mouvements de l'objet 1 de même qu'un accès étendu à l'objet puisque les mécanismes d'entraînement 3 ainsi que les arbres rotatifs sont tous disposés dans une région très localisée du dispositif.

Le troisième mouvement R3, permettant de faire tourner l'objet 1 sur lui-même, présente un intérêt moindre dans le cas d'applications du type dispositif d'illumination, caméra vidéo, ou encore du type dispositif de propulsion d'un fluide, par rapport à des cas d'applications relatives à des opérations d'usinage, par exemple.

Dans ce dernier cas, on peut prévoir qu'un mandrin conventionnel est fixé sur l'objet 1 par des moyens adaptés connus de l'homme du métier. Ainsi, plusieurs outils différents, comme par exemple des fraises ou des embouts de vissage, peuvent êtres rendus solidaires du dispositif de manière simple et rapide, le passage de l'un à l'autre étant également facilité.

De manière préférée, on prévoit de commander numériquement les trois moteurs 4, 5 et 6 indépendamment les uns des autres pour obtenir des déplacements de l'objet rapides et précis. Le dispositif peut ainsi être adapté sans grande difficulté sur un centre d'usinage à commande numérique de type courant.

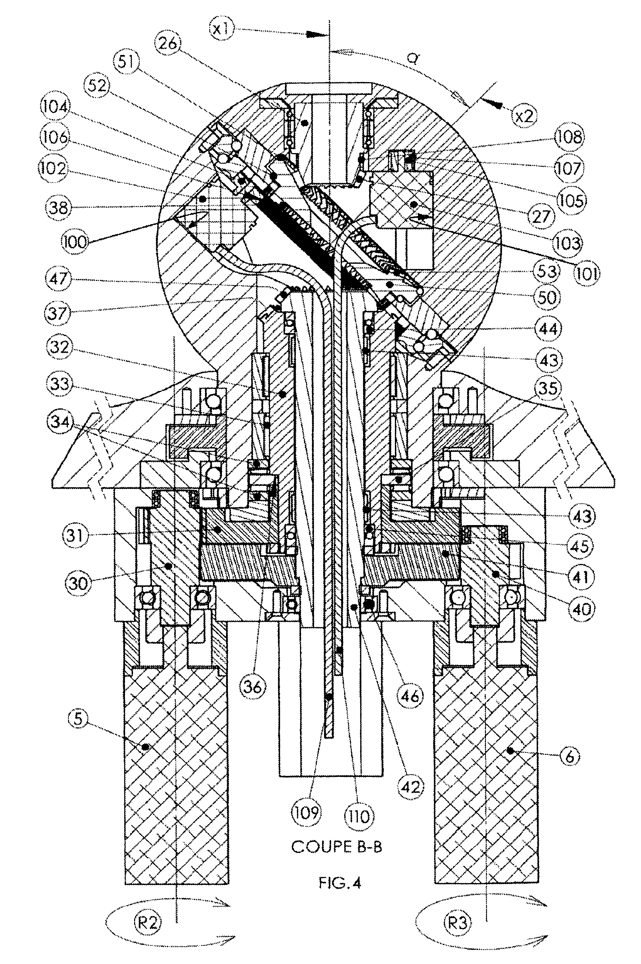

La figure 4 représente une variante de réalisation du dispositif décrit en relation avec les figures précédentes, suivant laquelle des moyens de détection des mouvements de rotation de certains constituants rotatifs du dispositif selon l'invention sont logés à l'intérieur de ce dernier.

Les références numériques des éléments déjà décrits en relation avec les figures précédentes sont inchangées.

Des évidements 100 et 101 ont été ménagés respectivement dans la base 7 et dans la calotte 8 du dispositif pour y loger des moyens de détection 102 et 103 des mouvements de rotation, d'une part, du support 8 en référence à la base 7 et, d'autre part, de l'objet 1 en référence au support 8.

Ces moyens de détection peuvent être de tout type adapté connu de l'homme du métier, notamment à détection mécanique ou optique des mouvements.

A titre indicatif, on a représenté, sur la figure 4, deux codeurs 102 et 103 de type mécanique. En effet, le codeur 102 présente un pignon 104 coopérant avec un engrenage 106 ménagé à l'intérieur de l'anneau 16. Par ailleurs, le codeur 103 comprend un arbre 105 monté en prise avec une courroie 107 agencée pour être entraînée en rotation sans glissement avec la périphérie 108 du tube 26 de l'objet 1.

Chacun de ces codeurs 102 et 103 est relié à une électronique de commande (non représentée), agencée à l'extérieur des mécanismes d'entraînement 3, au moyen de câbles 109 et 110 disposés dans le passage central du dispositif.

Grâce à ces caractéristiques particulières, les moyens de détection des mouvements de rotation peuvent être intégrés au dispositif selon la présente invention sans nécessiter une refonte de la structure de ce dernier et sans en diminuer les avantages spécifiques mentionnés plus haut.

En outre, l'intégration de ces moyens de détection permet d'améliorer encore la précision du dispositif selon l'invention. L'électronique de commande peut être programmée de manière à commander l'alimentation des moyens moteur sur la base d'instructions saisies par un utilisateur et, en prenant en compte les résultats des mesures des moyens de détection pour corriger éventuellement les déplacements des différents arbres d'entraînement, notamment dans le cadre d'applications du dispositif dans lesquelles des contraintes mécaniques importantes sont appliquées à l'objet 1.

Bien entendu, un détecteur supplémentaire (non visible) peut être prévu pour détecter les mouvements de rotation du premier arbre et vérifier que ces derniers sont conformes aux commandes générées par l'électronique de commande.

La description qui précède correspond à un mode de réalisation préféré de l'invention décrit à titre non limitatif. En particulier, les formes représentées et décrites pour les différents éléments constitutifs du dispositif ne sont pas limitatives.

Les moyens de liaison mécaniques décrits et représentés sous la forme d'engrenages peuvent être remplacés par tout autre type de liaison mécanique adapté, comme par exemple des contacts par friction, sans sortir du cadre de la présente invention.

La présente invention n'est pas limitée à la disposition d'un seul objet 1 sur la calotte 8. L'homme du métier pourra disposer une pluralité d'objets similaires ou différents sans grande difficulté, éventuellement répartis de manière régulière. Dans le cas d'un dispositif mis en oeuvre pour effectuer des opérations d'usinage, par exemple, on pourra mettre plusieurs objets similaires dont l'un porte une pièce en cours d'usinage pendant qu'un autre est chargé d'une nouvelle pièce à usiner et un troisième est déchargé d'une pièce qui vient d'être usinée.

Par ailleurs, on peut également prévoir, par exemple, que le renvoi intermédiaire et la calotte présentent chacun une forme allongée, l'objet portant lui-même un engrenage supplémentaire pour entraîner un objet supplémentaire en rotation. On peut prévoir plusieurs étages successifs basés sur ce même principe pour réaliser un bras robotisé comportant une pluralité d'articulations et dont l'extrémité libre porte un objet rotatif.

## Revendications

1. Dispositif d'entraînement d'au moins un objet (1), suivant au moins trois mouvements (R1, R2, R3) de rotation combinés, comportant:
- des premier (13), deuxième (32) et troisième (42) arbres creux et coaxiaux d'axe X1 destinés à être respectivement entraînés en rotation, par rapport audit axe X1, par des premiers (4), des deuxièmes (5) et des troisièmes (6) moyens moteur, indépendamment les uns des autres,
- ledit premier arbre présentant une extrémité libre (7) portant une première surface de sortie sensiblement plane, de contour général circulaire, et orientée perpendiculairement à un axe X2 coupant ledit axe X1 en définissant un angle α,
- des moyens de liaison mécanique (37) pour relier cinématiquement ledit deuxième arbre à un support (8) monté libre en rotation sur ladite première surface de sortie,
- un renvoi intermédiaire (50) d'axe X2 pour relier cinématiquement ledit troisième arbre audit objet (1), ce dernier étant monté dans ledit support en étant libre en rotation autour d'un axe X3, ledit axe X3 présentant un angle α par rapport audit axe X2,
lesdits premier, deuxième et troisième axes X1, X2 et X3 se coupant en un point unique,
**caractérisé en ce qu'**il comporte un passage central reliant lesdits arbres audit objet et **en ce que** ce dernier est monté en prise avec un premier engrenage (53) dudit renvoi intermédiaire orienté en direction dudit axe X2.

2. Dispositif selon la revendication 1, **caractérisé en ce que** ledit troisième arbre (42) est en prise avec un deuxième engrenage (54) dudit renvoi intermédiaire (50) orienté en direction dudit axe X2.

3. Dispositif selon la revendication 2, **caractérisé en ce que** ledit renvoi intermédiaire (50) est monté dans ledit support (8) au moyen d'au moins un palier (51, 52) disposé à l'extérieur du volume d'un cylindre d'axe X2 et délimité à sa périphérie par le plus grand desdits engrenages (53, 54).

4. Dispositif selon la revendication 3, **caractérisé en ce que** ledit renvoi intermédiaire est monté dans ledit support au moyen de deux paliers (51, 52) disposés de part et d'autre du plus grand desdits premier et deuxième engrenages (53, 54) suivant la direction dudit axe X2.

5. Dispositif selon l'une quelconque des revendications précédentes, **caractérisé en ce que** ledit support (8) présente la forme d'une calotte sphérique, ledit objet (1) présentant une extrémité externe (22) disposée sensiblement à fleur de la surface dudit support.

6. Dispositif selon la revendication 5, **caractérisé en ce qu'**il comporte en outre au moins un deuxième objet (1) monté dans ledit support (8) en étant agencé en prise avec ledit premier engrenage (53) dudit renvoi intermédiaire (50).

7. Dispositif selon l'une quelconque des revendications précédentes, **caractérisé en ce que** chacun desdits arbres (13, 32, 42) est solidaire d'une portée (12, 31, 41) radiale distante dudit support (8) et portant un engrenage destiné à être entraîné par lesdits moyens moteur (4, 5, 6) correspondants.

8. Dispositif selon l'une quelconque des revendications précédentes, **caractérisé en ce que** ledit objet (1) comporte des moyens de positionnement ou de préhension destinés à loger ou à tenir un élément nécessitant d'être entraîné dans des mouvements de rotations combinés.

9. Dispositif selon l'une quelconque des revendications 1 à 7, **caractérisé en ce que** ledit objet comprend un trou (23) pour permettre le passage de lumière ou de matière depuis au moins une extrémité de l'un desdits arbres (13, 32, 42) éloignée dudit objet.

10. Dispositif selon l'une quelconque des revendications précédentes, **caractérisé en ce qu'**il comporte des premiers moyens de détection (103) des mouvements de rotation dudit objet (1) en référence audit support (8), agencés à l'intérieur dudit support, et des seconds moyens de détection (102) des mouvements de rotation dudit renvoi intermédiaire (50) en référence audit premier arbre (13), solidaires de ladite extrémité libre dudit premier arbre et en étant agencés à l'intérieur de celle-ci.

11. Dispositif selon la revendication 10, **caractérisé en ce qu'**il comporte en outre des troisièmes moyens de détection des mouvements dudit premier arbre (13) en référence à une position absolue fixe.

12. Dispositif selon l'une quelconque des revendications précédentes, **caractérisé en ce qu'**il comporte en outre un bâti (2) dans lequel sont logés au moins trois moteurs (4, 5, 6) dont chacun est agencé pour entraîner en rotation l'un desdits arbres (13, 32, 42).

## Claims

1. A device for driving at least one item (1), according to at least three combined rotational movements (R1, R2, R3), comprising:
- first (13), second (32), and third (42) hollow shafts coaxial with axis X1, designed to be rotatingly driven respectively, with respect to said axis X1, by first (4), second (5), and third (6) drive means, independently from each other,
- said first shaft having a free end (7) carrying a first substantially flat output surface, having a generally circular outline, and being oriented perpendicularly to an axis X2 intersecting said axis X1 defining an angle α,
- mechanical connecting means (37) for kinematically connecting said second shaft to a support (8) mounted to rotate freely on said first output surface,
- an intermediate wheel (50) having an axis X2 for kinematically connecting said third shaft to said item (1), the latter being mounted in said support to freely rotate around an axis X3, said axis X3 having an angle α with respect to said axis X2,
said first, second, and third axes X1, X2, and X3 intersecting at a single point,
**characterized in that** it comprises a center passage connecting said shafts to said item, and **in that** the latter is engagedly mounted with a first gear (53) of said intermediate wheel oriented towards said axis X2.

2. The device according to claim 1, **characterized in that** said third shaft (42) is engaged with a second gear (54) of said intermediate wheel (50) oriented towards said axis X2.

3. The device according to claim 2, **characterized in that** said intermediate wheel (50) is mounted in said support (8) by means of at least one bearing (51, 52) arranged outside the volume of a cylinder having an axis X2 and being limited at the periphery thereof by the larger one of said gears (53,54).

4. The device according to claim 3, **characterized in that** said intermediate wheel is mounted in said support by means of two bearings (51, 52) arranged on either side of the larger one of said first and second gears (53, 54) along the direction of said axis X2.

5. The device according to any of the preceding claims, **characterized in that** said support (8) has the shape of a spherical cap, said item (1) having an external end (22) arranged substantially level with the surface of said support.

6. The device according to claim 5, **characterized in that** it further comprises a second item (1) mounted in said support (8) by being engagedly arranged on said first gear (53) of said intermediate wheel (50).

7. The device according to any of the preceding claims, **characterized in that** each of said shafts (13, 32, 42) is integral with a radial bearing surface (12, 31, 41) remote from said support (8) and carrying a gear, designed to be driven by said corresponding drive means (4, 5, 6).

8. The device according to any of the preceding claims, **characterized in that** said item (1) comprises positioning or gripping means, designed for accommodating or holding a member which requires driving in the combined rotational movements.

9. The device according to any of claims 1 to 7, **characterized in that** said item comprises a hole (23) for allowing light or material to pass from at least one end of one of the shafts (13, 32, 42) remote from said item.

10. The device according to any of the preceding claims, **characterized in that** it comprises first means (103) for detecting the rotational movements of said item (1) with reference to said support (8), arranged inside said support, and second means (102) for detecting the rotational movements of said intermediate wheel (50) with reference to said first shaft (13), integral with said free end of said first shaft and by being arranged therein.

11. The device according to claim 10, **characterized in that** it further comprises third means for detecting movements of said first shaft (13) with reference to a fixed absolute position.

12. The device according to any of the preceding claims, **characterized in that** it further comprises a frame (2) wherein at least three drives (4, 5, 6) are accommodated, each of which is arranged for rotatingly driving one of said shafts (13, 32, 42).

## Patentansprüche

1. Vorrichtung zum Mitnehmen mindestens eines Gegenstands (1) in mindestens drei kombinierten Drehbewegungen (R1, R2, R3), umfassend:
- erste (13), zweite (32) und dritte (42) zu einer Achse X1 koaxiale Hohlwellen, die dazu gedacht sind, jeweils im Verhältnis zu der Achse X1 durch erste (4), zweite (5) und dritte (6) Antriebsmittel unabhängig voneinander drehbar mitgenommen zu werden,
- wobei die erste Welle ein freies Ende (7) aufweist, das eine erste im Wesentlichen ebene Ausgangsfläche trägt, die einen im Allgemeinen kreisförmigen Umriss aufweist und zu einer Achse X2, welche die Achse X1 schneidet und dabei einen Winkel α bildet, rechtwinklig orientiert ist,
- mechanische Verbindungsmittel (37), um die zweite Welle kinematisch mit einem Träger (8) zu verbinden, der frei drehbar auf der ersten Ausgangsfläche gelagert ist,
- ein Zwischengetriebe (50) mit einer Achse X2, um die dritte Welle kinematisch mit dem Gegenstand (1) zu verbinden, wobei letzterer in dem Träger gelagert ist und dabei um eine Achse X3 frei drehbar ist, wobei die Achse X3 einen Winkel α im Verhältnis zu der Achse X2 aufweist,
wobei die erste, zweite und dritte Achse X1, X2 und X3 sich in einem einzigen Punkt schneiden,
**dadurch gekennzeichnet, dass** sie einen mittleren Durchgang umfasst, der die Wellen mit dem Gegenstand verbindet, und dass letzterer mit einem ersten Getriebe (53) des Zwischengetriebes, das in Richtung auf die Achse X2 orientiert ist, in Eingriff gelagert ist.

2. Vorrichtung nach Anspruch 1, **dadurch gekennzeichnet, dass** die dritte Welle (42) mit einem zweiten Getriebe (54) des Zwischengetriebes (50), das in Richtung auf die Achse X2 orientiert ist, in Eingriff gelagert ist.

3. Vorrichtung nach Anspruch 2, **dadurch gekennzeichnet, dass** das Zwischengetriebe (50) in dem Träger (8) mittels mindestens einem Lager (51, 52) gelagert ist, das außerhalb des Volumens eines Zylinders angeordnet ist, der eine Achse X2 aufweist und an seinem Umfang von dem größeren der Getriebe (53, 54) begrenzt wird.

4. Vorrichtung nach Anspruch 3, **dadurch gekennzeichnet, dass** das Zwischengetriebe in dem Träger mittels zweier Lager (51, 52) gelagert ist, die auf beiden Seiten des größeren der ersten und zweiten Getriebe (53, 54) entlang der Richtung der Achse X2 angeordnet sind.

5. Vorrichtung nach einem der vorhergehenden Ansprüche, **dadurch gekennzeichnet, dass** der Träger (8) die Form einer Kugelkalotte aufweist, wobei der Gegenstand (1) ein externes Ende (22) aufweist, das im Wesentlichen mit der Oberfläche des Trägers bündig angeordnet ist.

6. Vorrichtung nach Anspruch 5, **dadurch gekennzeichnet, dass** sie ferner mindestens einen zweiten Gegenstand (1) umfasst, der in dem Träger (8) gelagert ist, indem er in Eingriff mit dem ersten Getriebe (53) des Zwischengetriebes (50) angeordnet ist.

7. Vorrichtung nach einem der vorhergehenden Ansprüche, **dadurch gekennzeichnet, dass** jede der Wellen (13, 32, 42) mit einer radialen Lagerfläche (12, 31, 41) einstückig ist, die von dem Träger (8) entfernt ist und ein Getriebe trägt, das dazu gedacht ist, von den entsprechenden Antriebsmitteln (4, 5, 6) angetrieben zu werden.

8. Vorrichtung nach einem der vorhergehenden Ansprüche, **dadurch gekennzeichnet, dass** der Gegenstand (1) Positionier- oder Greifmittel umfasst, die dazu gedacht sind, ein Element, das in den kombinierten Drehbewegungen mitgenommen werden soll, aufzunehmen oder zu halten.

9. Vorrichtung nach einem der Ansprüche 1 bis 7, **dadurch gekennzeichnet, dass** der Gegenstand ein Loch (23) umfasst, um von mindestens einem Ende einer der Wellen (13, 32, 42), das von dem Gegenstand entfernt ist, Licht oder Material durchzulassen.

10. Vorrichtung nach einem der vorhergehenden Ansprüche, **dadurch gekennzeichnet, dass** sie erste Mittel (103) zum Erfassen der Drehbewegungen des Gegenstands (1) mit Bezug auf den Träger (8), die in dem Träger angeordnet sind, und zweite Mittel (102) zum Erfassen der Drehbewegungen des Zwischengetriebes (50) mit Bezug auf die erste Welle (13), die mit dem freien Ende der erste Welle einstückig sind und in ihrem Innern angeordnet sind, umfasst.

11. Vorrichtung nach Anspruch 10, **dadurch gekennzeichnet, dass** sie ferner dritte Mittel zum Erfassen der Bewegungen der ersten Welle (13) mit Bezug auf eine feststehende absolute Position umfasst.

12. Vorrichtung nach einem der vorhergehenden Ansprüche, **dadurch gekennzeichnet, dass** sie ferner ein Gestell (2) umfasst, in dem mindestens drei Antriebe (4, 5, 6) aufgenommen sind, von denen jeder zum drehbaren Mitnehmen einer der Wellen (13, 32, 42) angeordnet ist.
